# EUROPEAN PATENT SPECIFICATION

(11) **EP 2 921 476 B1**
(45) Date of publication and mention of the grant of the patent: **16.05.2018**
(21) Application number: 15157382.1
(22) Date of filing: 03.03.2015
(51) Int. Cl.: C07C 303/36, C07C 311/15, C08J 9/00, C08J 9/10, C08K 3/26, C08K 5/25

(54) **Blowing Agent**
TREIBMITTEL
AGENT DE SOUFFLAGE

(30) Priority: 18.03.2014 EP 14160446
(43) Date of publication of application: 23.09.2015
(73) Proprietor: Lanxess Ltd., Newbury, Beckshire RG14 5TN (GB)
(72) Inventor: Stevens, Russel, Old Hall Warrington (GB)
(74) Representative: Deblon, Jörg-Stephan

(56) References cited:
- DATABASE WPI Week 200779 Thomson Scientific, London, GB; AN 2007-851642 XP002729331, & JP 2007 217662 A (NIPPON KAGAKU KENKYUSHO KK) 30 August 2007 (2007-08-30)
- DATABASE WPI Week 201120 Thomson Scientific, London, GB; AN 2011-C30339 XP002729332, & JP 2011 046847 A (NIPPON KAGAKU KENKYUSHO KK) 10 March 2011 (2011-03-10)
- DATABASE WPI Week 200428 Thomson Scientific, London, GB; AN 2004-298243 XP002729333, & JP 2004 051871 A (YOSHIMURA H) 19 February 2004 (2004-02-19)

## Description

The present invention relates to a new composition comprising 4,4-oxybis(benzenesulfonylhydrazide) (OBSH) and sodium hydrogen carbonate (SBC), process for the manufacturing thereof and its use as blowing agent for the manufacturing of expanded thermoplastic materials and rubber compounds.

For the processing of thermoplastic materials, such as polyvinyl chloride (PVC) or polyolefins (PO, PE, PP), styrenics (PS, ABS, ASA, SAN) and natural and synthetic rubber such as nitrile butadiene rubber (NBR) or chloroprene rubber (CR), chemical blowing agents are used for decades. Chemical blowing agents are additives in the manufacturing of foamed thermoplastic polymers. Chemical blowing agents are stable at room temperature but decompose at elevated temperatures during the processing of the polymers while generating gas. This gas creates a foam structure in the thermoplastic polymer. Chemical blowing agents are used in a wide variety of applications including the production of foamed wall papers, artificial leather, floor and wall coverings, carpet backings, thermal insulation materials, insulation sealants, footwear, automotive components, cable insulation, and packaging materials.

Established blowing agents are exothermic blowing agents such as azodicarbonic acid diamide (azodicarbonamide, ADC, ADCA, CAS No. 123-77-3), the sulfonhydrazides 4,4'-oxybis(benzene-sulfonylhydrazide) (OBSH, CAS No. 80-51-3) and p-toluenesulfonylhydrazide, (TSH, CAS No. 1576-35-8) and endothermic blowing agents such as carbonates, like sodium bicarbonate (SBC, NaHCO₃, CAS No. 144-55-8), and citric acid and its esters.

Since many years, azodicarbonamide (ADC) is one of the most effective and widely used chemical blowing agents for use in cellular thermoplastic and rubber applications (cf. for example DE-AS 1 037 700). Azodicarbonamide decomposes on heating to give a high volume of gas, which consists mainly of nitrogen and carbon monoxide. These decomposition products are suitable to create a fine and uniform cell structured foam with a little shrink, a property which is fundamental in the production of soft foams such as plasticized PVC (P-PVC) or rubber foams. The decomposition temperature of azodicarbonamide can be reduced from 200 - 220°C to as low as 125°C by the addition of suitable activators (kickers), but useful decomposition rates are usually only achieved at 140°C and above. Particularly positive is the effective decomposition and rapid gas generation even if the decomposition reaction and gas generation process is carried out at low temperatures when decomposition activators are added. Activators or kickers are additives known in the art which are used to influence the decomposition temperature and rate of gas release of the blowing agent.

It is further known, that ADC can be combined with other chemical blowing agents in order to improve the processing behaviour of the thermoplastic material and to optimize the end product. For example, in cellular rigid PVC (U-PVC; without softening of the polymer by adding plasticizers) applications such as foamed profile or sheet, ADC is used in combination with sodium bicarbonate to produce a foam structure with acceptable technical performance (cf. GB 2 314 841). Because of differences in melt rheology, processing and demands on the foam structure, this technique cannot be transferred to plasticized, soft PVC and PVC plastisol processing.

Furthermore, in December 2012, the European Chemicals Agency (ECHA) announced that azodicarbonamide was to be included in their Candidates List of Substances of Very High Concern (SVHC) under Articles 57 and 59 of the Reach Regulation, which will limit or restrict the future use of ADC. Therefore, there is a need for substitutes for ADC having the same beneficial performance, especially for applications in plasticized, soft PVC (P-PVC).

Possible alternative solutions are provided by the classes of sulfonylhydrazides and carbonates, but these substances exhibit some disadvantages when used as blowing agents, especially when used for applications in plasticized, soft PVC.
p-Toluenesulfonylhydrazide (TSH) starts decomposition at a temperature of about 105°C, which is considered as being too low for the processing of rigid and plasticised PVC.

4,4'-Oxybis(benzenesulfonylhydrazide) (OBSH) also releases nitrogen upon decomposition but the gas generation characteristic is different to that of azodicarbonamide. At temperatures above the decomposition point of OBSH the nitrogen release is rapid, but occurs at a different temperature compared to azodicarbonamide. Below the absolute product decomposition temperature of about 155°C, the decomposition and thus the gas release is slow. Additionally OBSH has the disadvantage that the decomposition products and the foamed end article produced have an unintended brownish discolouration at the typical P-PVC processing temperatures which are higher than 180°C.

The carbonates such as sodium hydrogen carbonate, ammonium hydrogen carbonate, zinc carbonate do not liberate nitrogen but carbon dioxide and possibly water upon decomposition. Typically for carbon dioxide is its high solubility in the polymer, but it permeates out of the polymer matrix more rapidly than nitrogen, making it less efficient as a foaming agent, especially in plasticized PVC applications, The carbonates are generally not useful for the production of soft foams with a fine and uniform cell structure with little shrink. Sodium hydrogen carbonate, the most common representative of the carbonates used as chemical blowing agents, has a slow decomposition and release of gas, which occurs over a wider temperature range in comparison to both ADC and OBSH. The decomposition temperature of sodium hydrogen carbonate can be influenced by citric acid though carbon dioxide is still the principal gas which is evolved.

The above mentioned non-azodicarbonamide blowing agents fail to meet the expected requirement profile of a good blowing agent, and are in need of improvement in this respect.

From JP 2007 217662 A & Database WPI Week 200779 Thomson Scientific, London, GB; AN 2007-851642 XP002729331 plastisol compositions are known which contain chloroethylene resin, plasticizer and foaming agent. According to Examples 6 and 7 foaming agents consisting of sodium hydrogen carbonate and OBSH are disclosed.

It is an object of the present invention to provide a non-azodicarbonamide based blowing agent with good processing properties, which can be used advantageously for the preparation of expanded thermoplastic materials and rubber, especially for the preparation of expanded plasticized PVC.

In a first aspect, the present invention is directed to a composition comprising
a) from 4 to 50 % by weight of 4,4'-oxybis(benzenesulfonylhydrazide) as particles with a mean particle size D50 from 1 to 15 micron,
b) from 95 to 49 % by weight of sodium hydrogen carbonate as particles with a mean particle size D50 from 1 to 15 micron, and
c) from 1 to 15 % by weight of at least one coating agent c) selected from calcium, zinc or magnesium salts of stearic acid,
whereby the sum of components a), b) and c) adds up to 100 %.

The term "composition" shall mean a mixture or blend of two or more components.

The term "comprising" is not intended to exclude the presence of any additional component, step or procedure, whether or not the same is specifically disclosed. In order to avoid any doubt, all compositons claimed through use of the term "comprising" may include any additional additive, adjuvant or compound, whether polymeric or otherwise, unless stated to the contrary.

The term "thermoplastic material" shall mean a polymer that becomes pliable or moldable above a specific temperature, so is capable of flow at high temperatures below the thermal decomposition temperature and returns to a solid state upon cooling. A polymer is a macromolecular compound prepared by reacting (i.e. polymerizing, condensation) monomers of the same or different type, including homo- and copolymers. Thermoplastic materials are made by chain polymerization, polyaddition and / or polycondensation.

The term "rubber" shall mean natural or synthetic rubber. In general "rubber" shall mean elastic polymers (elastomers), which is crosslinked polymeric materials. Rubber (elastomers) are made by polymerization of specific monomers, which are pure hydrocarbons (e.g. ethylene, propylene, butadiene, isobuitylene, isoprene, norbornene, cyclooctene, styrene, alpha-methyl styrene), halogenated hydrocarbons (e.g. chloroprene, dichlorobutadiene, vinylidene fluorid, hexafluoropropylene) and monomers with other functional groups (e.g. acrylic acid esters, acrylonitriole, vinyl acetate). Elastomers are hard and glasslike at low temperatures and are not subject to viscous flow at high temperatures. At ambient temperatures, especially at room temperature they behave in a rubber-elastic manner. Rubber-elastic behaviour is characterized by relatively low shear modulus values that are dependent on temperature to a comparatively low degree.

The term "expanded" in connection with the terms "thermoplastic material" and "rubber" shall mean such material or rubber with a cellular structure which is formed by gas generation from thermal decomposition or chemical reaction of a chemical blowing agent during processing.

In order to avoid any doubt, in the context of the present invention, the following definitions and parameters, in general and in preferred embodiments, shall be regarded as embracing all possible combinations of such general and preferred embodiments.

The composition of the present invention can contain additionally one or more additives. In such case the amounts of OBSH and sodium hydrogen carbonate are to be selected from the given ranges in a way that the sum of percent by weight of all components contained in the composition amounts 100 %.

In a preferred embodiment of the present invention the composition comprises OBSH and sodium hydrogen carbonate in powder form.

The term "powder" shall mean a compound consisting of ground or pulverized solid particles.

For certain applications the production of a fine cellular foam, so to produce a certain small amount of gas at one place, might be desirable. In order to improve the cellular foam structure the single particles of OBSH and of sodium hydrogen carbonate contained in the composition have a characteristic particle size and particle size distribution. Said particle size and particle size distribution is characterised by the D10, D50 and D90 value as a result of a particle size determination which corresponds to particle size at volume under 10 %, 50 % and 90 % based on a volume average.

In a preferred embodiment of the present invention the composition comprises
a) OBSH as particles with a mean particle size D50 from 4 to 13 micron, very preferred from 6 to 10 micron and
b) sodium hydrogen carbonate as particles with a mean particle size D50 from 2 to 10 micron, very preferred from 3 to 6 micron.

In a further preferred embodiment of the present invention the composition comprises
a) OBSH as particles with a mean particle size D50 from 1 to 15 micron, preferred from 4 to 13 micron, very preferred from 6 to 10 micron and a particle size distribution characterised by a D10 from 0,1 to 3,0 micron, preferred from 0,5 to 2 micron and very preferred from 1 to 1,5 micron and a D90 from 3 to 40 micron, preferred from 5 to 30 micron and very preferred from 15 to 25 micron
b) sodium hydrogen carbonate as particles with a mean particle size D50 from 1 to 15 micron, preferred from 2 to 10 micron very preferred from 3 to 6 micron and a particle size distribution characterised by a D10 from 0,1 to 3,0 micron, preferred from 0,5 to 2 micron and very preferred from 0,7 to 1,2 micron and a D90 from 3 to 40 micron, preferred from 5 to 30 micron and very preferred from 7 to 13 micron.

The term "mean particle size" refers to the volume average determined by laser diffraction particle size analysis. D50 is the mean particle size for the volume distribution, where half of the particles based on volume are below this value.

The term "particle size distribution" refers to width of the distribution which is characterised by D10 and D90 where D10 gives the particle size at volume where 10 % of distribution is below and D90 the particle size at volume where 90% of distribution is below. The smaller the difference between D10 and D90 the narrower the distribution.

The composition of the present invention contains OBSH and sodium hydrogen carbonate as particles which are coated with a coating agent. Sodium hydrogen carbonate in powder form, respectively its particles, tends to agglomerate, especially when exposed to humidity and/or pressure. Such agglomeration, can be prevented if the SBC particles and/or the OBSH particles are coated with a coating agent. Such coating can further improve the properties of the inventive composition, especially its consistence of dispersion and fine spreading, by avoidance of agglomeration in the polymer.

The term "humidity" is known as the amount of water vapour present in atmosphere e.g, water vapour present in atmospheric gases like oxygen, nitrogen, carbon dioxide etc.

The composition of the present invention comprises a) OBSH and b) sodium hydrogen carbonate as particles where the sodium hydrogen carbonate particles and/or the OBSH particles are coated with a coating agent c).

The term "coating agent" shall mean in general a compound or composition that is able to cover the surface of particles of a different compound partly or completely. Examples for coating agents are metal salts of fatty acids such as calcium stearate, zinc stearate, or magnesium stearate.

The composition of the present invention contains coating agents c) selected from calcium, zinc or magnesium salts of stearic acid or mixtures thereof, especially calcium stearate. The coating agents c) can be used alone or as a mixture of two or more of the coating agents mentioned.

Preferably the particles of a) OBSH and/or b) sodium hydrogen carbonate are coated with at least one coating agent c) in an amount of about 5 to 13 % by weight and very preferred 7 and 11% by weight of coating agent, based on the total amount of a) plus b).

In a preferred embodiment the composition of the present invention comprises a) OBSH as particles with a mean particle size from 4 to 13 micron, very preferred from 6 to 10 micron, coated with at least one coating agent c) in an amount of about 5 to 13 % by weight and very preferred 7 and 11% by weight of coating agent based on the amount of OBSH.

In a preferred embodiment the composition of the present invention comprises b) sodium hydrogen carbonate particles with a mean particle size from 2 to 10 micron and very preferred from 3 to 6 micron, coated with a coating agent c) in an amount of about 5 to 13 % by weight and very preferred 7 and 11% by weight of coating agent, based on the amount of sodium hydrogen carbonate.

The coating agent c) is preferably applied to the OSBH and/or sodium hydrogen carbonate particles in powder form.

Alternatively the coating agent c) is applied in liquid form as a melt or as a solution in a solvent. As a solvent any solvent known in the art which is suitable as a solvent for the used coating agent can be employed.

Liquid application techniques make a good coating using only a low percentage of coating agent possible even in the coating of fine sodium hydrogen carbonate powders.

The water content of the coating agent c) preferably amounts to maximum 5% by weight of water, very preferred 1 to 5% by weight.

The composition may contain one or more further additives. Suitable additives are such known in the art as being suitable for a composition for use as a blowing agent. Examples for suitable blowing agent additives i) are activators, blowing agents, dispersants and/or processing oils. The blowing agent additive i) can be employed in suitable amounts known to the skilled artisan.

In terms of the present invention "blowing agent" shall mean a compound or composition, useful as additive in the manufacturing of foamed thermoplastic polymers and foamed rubber, which is stable at room temperature but decomposes at elevated temperatures during the processing of the polymers while generating gas.

The composition of the present invention can be prepared by mixing a) OBSH and b) sodium hydrogen carbonate, preferably in powder form, in the presence of at least one coating agent c) and optionally in the presence of one or more blowing agent additives i) in a mixing device.

Alternatively, the composition of the present invention can be prepared by separately mixing a) OBSH with at least one coating agent c) and/or separately mixing b) sodium hydrogen carbonate with at least one coating agent c) in a mixing device and then mixing the thus obtained mixtures together in a mixing device.

The composition of the present invention can be produced in a variety of processes known to the skilled artisan including a variety of standard mixing devices. Standard mixing devices are, not excluding others, rotary process chambers, rotor mixers, double cone-blender, drum mixing, tumble blending, blade mixers. Co-micronisation processes can be used and, in case the coating agent is applied in liquid form, spray on processes followed from case to case by drying and standard mixing processes.

The present invention is further directed to the use of a composition according to the present invention as a blowing agent in the manufacturing of expanded thermoplastic materials and expanded rubber.

According to the present invention, "thermoplastic materials" are including, but not limited to known thermoplastic materials, such as polyvinyl chloride (PVC), vinylchloride-based copolymeres, polyolefins such as polyethylene (PE), polypropylene (PP), and styrenics such as polystyrene (PS), acrylonitrile butadiene styrene (ABS), acrylic styrene acrylonitrile (ASA), styrene acrylonitrile (SAN).

"Rubber" shall mean, but not limited to, natural and synthetic rubber such as acrylate rubber, nitrile butadiene rubber (NBR), chloroprene rubber (CR), ethylene vinylacetate copolymers (EVA), styrene butadiene rubber (SBR), and ethylene propylene rubber (EPDM).

Preferably, the composition of the present invention is used for the manufacturing of expanded, plasticized PVC (P-PVC).

The present invention is further directed to a process for the manufacturing of expanded thermoplastic materials and expanded rubber, characterized in mixing a composition according to the present invention with at least one thermoplastic material and/or at least one rubber, optionally in the presence of at least one polymer additive ii), and then heating the mixture up to a temperature on which decomposition of the composition occurs, or above.

Preferably the decomposition of the composition of the present invention occurs in a range of 120 to 180 °C. The decomposition temperature can be determined by differential scanning calorimetry (DSC), (range: 20 - 300°C, heating rate 10 degree C per minute, amount 4 mg), a method which is known to the skilled artisan.

Suitable polymer additives ii) in the process for the preparation of expanded thermoplastic materials and rubber, preferably in the process for the preparation of expanded plasticized PVC are, not excluding others, light stabilisers and other stabilisers, antioxidants, blowing agents, lubricants, processing aids, antistatic agents, diluting agents, impact modifiers, colorants and pigments, optical brighteners, flame retardants and fillers.

Said polymer additives are in general employed in amounts known as being suitable for such additives ii).

Preferably the process of the present invention is directed to the manufacturing of expanded plasticized PVC.

In a preferred embodiment, the process of the present invention is directed to the manufacturing of expanded plasticized PVC, characterized in mixing a composition according to the present invention with the PVC, preferably in powder form, and in the presence of at least one plasticizer d) and optionally in the presence at least one polymer additive ii) in a mixing device, followed by shaping the mixture and then heating the shaped mixture up to a temperature on which decomposition of the composition occurs, or above, preferably to a temperature in the range from 150 to 220 °C.

In general, PVC is employed in form of a suspension, mass, and preferably as emulsion- and microsuspension- PVC. PVC resins used for the PVC plastisols are paste or plastisol resins which typically are emulsion- and microsuspension-PVC. In PVC plastisol processing a share of maximum 50% of plastisol resins can be replaced by extender PVC. Extender PVC typically has large particle size, a low plasticizer absorbency and are used to modify the viscosity of the plastisol. Extender PVC is often a special suspension PVC.

"Plasticizers" are additives suitable in the manufacturing of plasticized PVC which improve the workability of compounds and modify end-product properties like flexibility, softness, and distensibility.

Suitable plasticizers d), not excluding others, are for example esters of phthalic acid, terephthalic acid, isophthalic acid, trimellitic acid, benzoic acid, dibasic acids such as, not excluding others adipic acid, sebaic acid and succinic acid, phosphoric acid, citric acid, alkylsulfonic acids, monohydric alcohols such as, not excluding others, hexanol, 2-ethylhexanol, n- and i-octanol, isononanol, propylheptanol, i- and n-decanol, fatty alcohols, phenol, and glycols, glycerol and polyhydric alcohols, and of bio derived acids and / or bio derived alcohols.

Especially in pressureless PVC plastisol the blowing agent decomposition, respectively the gas generation and the gelation of the liquid plastisol towards a solid but soft PVC end articles has to be synchronised. Is the viscosity of the PVC compound too low when the decomposition and gas generation of the blowing agent happens, then the gas can escape from the polymer melt, with the disadvantage of a gas loss and a lower gas utilization percent with the result of an insufficient density reduction or, when the counter pressure of the polymer melt is too low, a coarser foam. A too high viscosity of the PVC compound, when the decomposition and gas generation of the blowing agent happens, gives also an insufficient density reduction or bad foam structure, because the pressure of gas generated meets a higher counter pressure of the polymer respectively an inflexible, not foamable and not expandable high viscous or solid polymer.
A good foam structure and surface smoothness is achieved when the blowing agent decomposition and thus gas generation and processing are synchronised. Because of the low temperature decomposition of the inventive blowing agents composition and its high rate of gas generation, the quality of the foam can be improved when using a plasticizer d) with a dissolution temperature of 130 degree Celsius and below.

In the process of the present invention for the manufacturing of expanded plasticized PVC, it is preferred to employ at least one plasticizers d) which has a dissolution temperature in the PVC of maximum 130°C, preferably in the range from 120 to 130 °C.

The term "dissolution temperature" shall mean the temperature at which a heterogene mixture of plasticizer and polymer turns into a homogene mixture. The dissolution temperature can be measured according to the method mentioned in the experimental part of the present specification.

In the process for the manufacturing of plasticized PVC according to the present invention preferably one or more plasticizers d) selected from dialkylesters of phthalic acid, preferably diisononyl phthalate (DINP); dialkylesters of terephthalic acid, preferably di-2-ethylhexyl terephthalate (DOTP); trialkylesters of trimellitic acid, preferably tri-2-ethylhexyl trimellitate (TOTM); alkylesters of benzoic acid, preferably isodecyl benzoate and isononyl benzoate; benzoic diesters of mono-, di-, tri- or polyalkylene glycols, preferably propylene glycol dibenzoate and dipropylenenglycol dibenzoate; dialkylesters of dibasic acids, preferably di-2-ethylhexyl adipate, di-2-ethylhexyl sebacate and di-2-ethylhexyl succinate; alkyl- and aryl and mixed alkyl/aryl triesters of phosphoric acid, preferably tri-2-ethylhexyl phosphate, triphenyl phosphate, tricresyl phosphate, diphenyl cresyl phosphate; trialkyl and acetylated trialkyl esters of citric acid, preferably tributyl citrate and acetyl tributyl citrate; and arylesters of alkylsulfonic acids, preferably a mixture of C₁₄-C₁₇alkylester of phenylsulfonic acid (MESAMOLL®, trade product of LANXESS Deutschland GmBH, CAS No.: 091082-17-6), are employed.

Very preferably a mixture of MESAMOLL® with one or more plasticizers d) having a dissolution temperature in PVC of maximum 130°C is employed.

Very preferably a mixture of MESAMOLL® with D1NP or with DOTP or with DINCH in a ratio from 50 : 50 to 90 : 10 is employed.

In the process for the manufacturing of expanded plasticized PVC according to the present invention, in general the plasticizers are used in an amount from 20 to 300 parts, preferably from 40 and 150 parts and very preferably between 50 to 100 parts per 100 parts of PVC.

In the manufacturing process of expanded thermoplastic materials and expanded rubber in general a range of processing techniques are employed such as injection moulding, extrusion, press moulding and spread coating.

In the manufacturing process of expanded PVC preferably shaping techniques such as injection moulding and extrusion of the PVC and spread coating of PVC plastisols are employed. Spread coating is the process for producing layers and coatings, where the polymer dispersion, here a PVC plastisol, is spread on a carrier such as, not excluding others, a fabric or knitted fabric or a metallic and non-metallic substrate, followed by an additional processing step such as heating of the compound in an oven.

In general the amount of inventive composition used as blowing agent is depending on the manufacturing process and the articles to be produced. In the process for the manufacturing of expanded thermoplastic materials and expanded rubber preferably an amount of inventive composition used as blowing agent in the range from 0.05 to 20 % parts per hundred parts of polymer resin is added.

In a further aspect, the composition of the present invention further comprises at least one plasticizer d), at least one polyvinyl chloride polymer e), and optionally at least one polymer additive ii).

Compositions which are prepared by using so-called paste resins, which are typically emulsion and microsuspension PVC, are often named "plastisols".

In a preferred embodiment, the composition of the present invention comprises at least one polyvinylchloride polymer e) and at least one plasticizer d), preferably one or more plasticizers d) selected from dialkylesters of phthalic acid, preferably diisononyl phthalate (DINP); dialkylesters of terephthalic acid, preferably di-2-ethylhexyl terephthalate (DOTP); trialkylesters of trimellitic acid, preferably tri-2-ethylhexyl trimellitate (TOTM); alkylesters of benzoic acid, preferably isodecyl benzoate and isononyl benzoate; benzoic diesters of mono-, di-, tri- or polyalkylene glycols, preferably propylene glycol dibenzoate and dipropylenenglycol dibenzoate; dialkylesters of dibasic acids, preferably di-2-ethylhexyl adipate, di-2-ethylhexyl sebacate and di-2-ethylhexyl succinate; alkyl- and aryl and mixed alkyl/aryl triesters of phosphoric acid, preferably tri-2-ethylhexyl phosphate, triphenyl phosphate, tricresyl phosphate, diphenyl cresyl phosphate; trialkyl and acetylated trialkyl esters of citric acid, preferably tributyl citrate and acetyl tributyl citrate; and arylesters of alkylsulfonic acids, preferably MESAMOLL® (trade product of LANXESS Deutschland GmbH).

In a very preferred embodiment, the composition of the present invention comprises a as plasticizer d) a mixture of MESAMOLL® with one or more plasticizers selected from plasticizers d) having a dissolution temperature in PVC of maximum 130°C .

In a very preferred embodiment, the composition of the present invention comprises as plasticizer d) a mixture of MESAMOLL® with DINP or with DOTP or with DINCH, in a ratio from 50 : 50 to 90 : 10.

The plastisol composition of the present invention preferably comprises at least one plasticizer d) in an amount from 20 to 300 parts, preferably from 40 and 150 parts per 100 parts of polyvinyl chloride polymer e).

In a preferred embodiment the plastisol composition of the present invention comprises
100 parts by weight of at least one polyvinyl chloride polymer e) in form of an emulsion or microsuspension or extender PVC,
from 20 to 300 parts by weight, preferably from 40 to 150 parts and very preferably from 50 to 100 parts by weight of at least one plasticizer d),
from 0 to 70 parts by weight, preferably from 5 to 60 parts and very preferably from 10 to 50 parts by weight of at least one additive i) and/or ii), and
from 0,05 to 20 parts by weight preferably from 0,5 to 10 parts and very preferably from 1 to 5 parts by weight of the blowing agent composition of the present invention.

The plastisol composition of the present invention can be prepared by mixing a) OBSH and b) sodium hydrogen carbonate, preferably in powder form, and preferably in the presence of at least one coating agent c), at least one plasticizer d), at least one polyvinyl chloride polymer e) and optionally one or more blowing agent additives i) and optionally one or more polymer additives ii), in a mixing device. The blowing agent composition of the present invention can be pre-mixed and the mix is added in the preparation process of the plastisol or the components of the blowing agent composition can be added separately as individual components in the preparation process of the plastisol.

With the compositions of the present invention, when employed as blowing agents according to the process of the present invention, it is possible to produce colourless foams of thermoplastic materials or rubber, especially of plasticized PVC, with fine uniform cell structure and a smooth regular surface.

Examples of shaped articles are for example foamed wall papers, artificial leather, floor and wall coverings, carpet backings, thermal insulation materials, insulation sealants, footwear, automotive components, cable insulation, and packaging materials.

The subject of the present invention shall be illustrated by the examples below, but shall not be interpreted as a restriction of the scope of the invention.

### Examples

### 1. Preparation of Plastisol Compositions

Inventive and non-inventive plastisol compositions of Examples 1-5 were prepared. The components and amounts as mentioned in Table 1 were chosen. In each case, the components were dispersed on a high speed mixer and them mixed and de-aerated.

### 2. Plastisol Foam Expansion

The resulting liquid PVC pastes (plastisols) of Examples 1 to 5 were in each case spread coated at a thickness of about 0.5 mm on wall paper and heated in a Werner Mathis oven set at 190 degree C for 120 seconds.

The surface and structure of the foam was assessed visually. The colour of the foam was determined visually and with a colour measuring instrument (Hunter Lab Ultra Scan PRO, Yellowness Index per ASTM Method E313). The expansion rate is the ratio of the thickness of the foamed product after Werner Mathis oven heating and the thickness of the spread coated layer (here about 0.5mm) before it passes Werner Mathis oven heating. The results are contained in Table 1.

**Table 1: Compositions and Results**

| Example | 1* | 2* | 3* | 4* | 5** |
|---|---|---|---|---|---|
| PVC (K 67) ¹⁾ | 100 | 100 | 100 | 100 | 100 |
| DINP | 35 | 35 | 35 | 35 | 35 |
| Mesamoll® ²⁾ | 35 | 35 | 35 | 35 | 35 |
| CaCO₃ | 5 | 5 | 5 | 5 | 5 |
| OBSH | 0 | 0 | 0 | 3.5⁷⁾ | 0.875⁷⁾ |
| SBC | 3.5³⁾ | 3.5⁴⁾ | 3.5⁵⁾ | 0 | 2.625 |
| SBC coating ⁶⁾ | 0% | 5% | 10% | 0% | 10% |
| Foam | | | | | |
| Surface | rough | rough | smooth | rough | smooth |
| Structure | coarse irregular | coarse | fine, smooth | coarse, irregular | fine, regular |
| Colour / YI | | | | 10.2 | 9.1 |
| Expansion rate | | | 1,2 | 2.7 | 1.9 |

| | | | | | |
|---|---|---|---|---|---|
| * non-inventive ** inventive 1) Vestolit® E 7012 S (trade product of Vestolit GmbH) 2) Mesamoll® (trade product of Lanxess Deutschland GmbH) 3) SBC technical grade, D50 approximately 100µm 4) SBC, 5% Calcium stearate coating, D10 = 1,7 micron, D50 = 10 micron, D90 = 33 micron 5) SBC, 10 % Calcium stearate coating, D10 = approximately 0,9 micron, D50 = approximately 4,0 micron, D90 = approximately 9,5 micron (GENITRON® TP BCH 51051, trade product from LANXESS Limited) 6) Amount of Calcium stearate coating of the SBC 7) OBSH, uncoated, D10 = approximately 1,2 micron, D50 = approximately 8,4 micron, D90 = approximately 21,5 micron, (GENITRON® OB, trade product from LANXESS Limited) DINP = di-isononyl phthalate CaCO₃ = filler YI = Yellowness Index | | | | | |

### 3.Conclusion

The results of experiments show that the foam quality with respect to cell structure, surface roughness and discoloration at the temperatures, at which plasticized PVC is processed, are improved when using the inventive blowing agent composition.

### Foam Samples Surface Appearance / Colour:

After 120 seconds foaming in the oven, the surface of the foam produced with the inventive blowing agent composition (Example 5) is smoother and the colour is improved and whiter than the foam produced with 4,4'-Oxybis(benzenesulfonylhydrazide) (OBSH) alone (Example 4) at same conditions. The surface of the SBC foamed test specimen (Example 3) is smooth, the colour of the surface looks slightly more yellowish as a result of the insufficient foaming.

### Foam Samples Cell Structure:

Comparing the cross sectional view of the 120 seconds oven time foam samples it is evident that the sample produced with 4,4'-Oxybis(benzenesulfonylhydrazide) alone (Example 4) has a significantly coarser and irregular cell structure than the sample produced with the inventive blowing agent composition (Example 5), which is finer and more regular. The foam produced with SBC alone (Example 3) contains fine cells, a result of the insufficient foaming.

### Foam Samples Foam Thickness / Expansion Rate:

The thickness of the foam sample produced with 4,4'-Oxybis(benzenesulfonylhydrazide) alone (Example 4) is greater than that produced with the inventive composition (Example 5). The expansion rate of the SBC foamed test specimen is insufficient. This reiterates the difference in efficiency of nitrogen and carbon dioxide in their foaming performance especially in P-PVC applications.

### Determination of Dissolution Temperature:

48,0 g of the test substance (plasticizer) was weighed in a beaker with magnetic stirrer and thermometer. The beaker was put on an magnetic heat stirrer in a holder between lamp and photo cell. The photo cell takes a change in light transmittance of the sample. Then 2 g of polyvinyl chloride (PVC, Vinnolit® S4170; Vinnolit GmbH, Germany) and per pipette 2 drops of PVC-stabilizer (organotinstabilizer) were added. The polyvinyl chloride was stirred in the plasticizer and heated up to 100°C with a heating rate of 5-8°C per minute and then further heated up an average of 3°C per minute. The dissolution temperature was achieved when the PVC was dissolved and no change in transmission factor during 3 minutes in a row could be noticed. When a temperature of the content of 200°C was achieved, the determination was stopped. A low dissolution temperature of below 130°C demonstrates a good compatibility of the plasticizer with polyvinyl chloride and is an indicator for a fast processing.

From Table 2 the dissolution temperature of some plasticizers can be seen.

**Table 2: Dissolution temperature**

| Plasticizer | Dissolution temperature |
|---|---|
| DINP¹⁾ | 138°C |
| DOTP²⁾ ; Mesamoll® 1 : 1 | 129°C |
| DINCH³⁾ : Mesamoll® 1 : 1 | 127°C |
| DINP : Mesamoll® 1 : 1 | 126°C |
| Mesamoll® | 120°C |

| | |
|---|---|
| 1) DINP: Di-isononyl phthalate 2) DOTP: Di-2-ethylhexyl terephthalate 3) DINCH: Diisononyl-1,2-cyclohexane dicarboxylat | |

### Determination of Particle Size:

The particle size was determined with a Malvern Mastersizer, Scirocco 2000 dry dispersion unit, analysis model general purpose, size range 0.020 to 2000.00µm, particle RI 1.500 and dispersant RI 1.000. The D10, D50 and D90 values characterize the particle size distribution and its results correspond to particle size at volume under 10 %, 50 % and 90 % based on a volume average.

## Claims

1. A composition comprising
a) from 4 to 50 % by weight of 4,4'-oxybis(benzenesulfonylhydrazide) as particles with a mean particle size D50 from 1 to 15 micron,
b) from 95 to 49 % by weight of sodium hydrogen carbonate as particles with a mean particle size D50 from 1 to 15 micron, and
c) from 1 to 15 % by weight of at least one coating agent c) selected from calcium, zinc or magnesium salts of stearic acid,
whereby the sum of components a), b) and c) adds up to 100 %.

2. The composition according to Claim 1, further comprising at least one plasticizer d) and at least one polyvinylchloride polymer e).

3. The composition according to Claim 2, comprising at least one plasticizer d) selected from dialkylesters of phthalic acid, preferably diisononyl phthalate; dialkylesters of terephthalic acid, preferably di-2-ethylhexyl terephthalate; trialkylesters of trimellitic acid, preferably tri-2-ethylhexyl trimellitate; alkylesters of benzoic acid, preferably isodecyl benzoate and isononyl benzoate; benzoic diesters of mono-, di-, tri- or polyalkylene glycols, preferably propylene glycol dibenzoate and dipropylenenglycol dibenzoate; dialkylesters of dibasic acids, preferably di-2-ethylhexyl adipate, di-2-ethylhexyl sebacate and di-2-ethylhexyl succinate; alkyl- and aryl and mixed alkyl/aryl triesters of phosphoric acid, preferably tri-2-ethylhexyl phosphate, triphenyl phosphate, tricresyl phosphate, diphenyl cresyl phosphate; trialkyl and acetylated trialkyl esters of citric acid, preferably tributyl citrate and acetyl tributyl citrate; and arylesters of alkylsulfonic acids.

4. A plastisol composition comprising
100 parts by weight of at least one polyvinyl chloride polymer e) in form of an emulsion or microsuspension or extender PVC,
from 20 to 300 parts by weight, preferably from 40 to 150 parts and very preferably from 50 to 100 parts by weight of at least one plasticizer d),
from 0 to 70 parts by weight, preferably from 5 to 60 parts and very preferably from 10 to 50 parts by weight of at least one blowing agent additive i) and/or one polymer additive ii), and
from 0,05 to 20 parts by weight preferably from 0,5 to 10 parts and very preferably from 1 to 5 parts by weight of a composition according to any of Claims 1 to 3.

5. A process for the preparation of a composition according to any of Claims 1 to 4, **characterized in that** a) 4,4-oxybis(benzenesulfonylhydrazide) particles with a mean particle size D50 from 1 to 15 micron, and b) sodium hydrogen carbonate particles with a mean particle size D50 from 1 to 15 micron, preferably in powder form, are mixed in a mixing apparatus, optionally in the presence of at least one coating agent c), optionally in the presence of at least one plasticizers d), optionally in the presence of at least one polyvinylchloride polymer e) and optionally in the presence of at least one blowing agent additive i) and/or one polymer additive ii).

6. The use of a composition according to any of Claims 1 to 3 as a blowing agent, preferably in the manufacturing of expanded thermoplastic materials and expanded rubber.

7. A process for the manufacturing of expanded thermoplastic materials and expanded rubber, **characterized in that** a composition according to any of Claims 1 to 3 is mixed with at least one thermoplastic material and/ or at least one rubber optionally in the presence of at least one polymer additive ii), and then heating the mixture up to a temperature in the range from 150 to 220 °C.

8. The process according to Claim 7, **characterized in that** the thermoplastic material is selected from polyvinyl chloride, vinylchloride-based copolymeres, polyolefins such as polyethylene, polypropylene, and styrenics such as polystyrene, acrylonitrile butadiene styrene, acrylic styrene acrylonitrile, styrene acrylonitrile, acrylate rubber, nitrile butadiene rubber, chloroprene rubber, ethylene vinylacetate copolymers, styrene butadiene rubber, and ethylene propylene rubber.

9. The process according to Claim 7 or 8 for the manufacturing of expanded, plasticized PVC, **characterized in that** in mixing a composition according to any one of Claims 1 to 8 with the PVC, preferably in powder form, and in the presence of at least one plasticizer d) and optionally in the presence at least one polymer additive ii) in a mixing device, followed by shaping the mixture and then heating the shaped mixture up to a temperature in the range from 150 to 220 °C or above.

10. The process according to Claim 9, **characterized in that** the PVC is employed in form of a suspension, mass, and preferably as emulsion- and microsuspension-PVC.

11. The process according to Claim 9 or 10, **characterized in that** the plasticizer d) is selected from dialkylesters of phthalic acid, preferably diisononyl phthalate; dialkylesters of terephthalic acid, preferably di-2-ethylhexyl terephthalate; trialkylesters of trimellitic acid, preferably tri-2-ethylhexyl trimellitate; alkylesters of benzoic acid, preferably isodecyl benzoate and isononyl benzoate; benzoic diesters of mono-, di-, tri- or polyalkylene glycols, preferably propylene glycol dibenzoate and dipropylenenglycol dibenzoate; dialkylesters of dibasic acids, preferably di-2-ethylhexyl adipate, di-2-ethylhexyl sebacate and di-2-ethylhexyl succinate; alkyl- and aryl and mixed alkyl/aryl triesters of phosphoric acid, preferably tri-2-ethylhexyl phosphate, triphenyl phosphate, tricresyl phosphate, diphenyl cresyl phosphate; trialkyl and acetylated trialkyl esters of citric acid, preferably tributyl citrate and acetyl tributyl citrate; and arylesters of alkylsulfonic acids.

12. An expanded thermoplastic material or an expanded rubber manufactured by the process according to Claim7.

13. A shaped article manufactured from the expanded thermoplastic material or the expanded rubber according to Claim 12.

## Patentansprüche

1. Zusammensetzung, umfassend
a) 4 bis 50 Gew.-% 4,4'-Oxybis(benzolsulfonylhydrazid) in Form von Teilchen mit einer mittleren Teilchengröße D50 von 1 bis 15 Mikron,
b) 95 bis 49 Gew.-% Natriumhydrogencarbonat in Form von Teilchen mit einer mittleren Teilchengröße D50 von 1 bis 15 Mikron und
c) 1 bis 15 Gew.-% mindestens eines Beschichtungsmittels c), das aus Calcium-, Zink- oder Magnesiumsalz von Stearinsäure ausgewählt ist,
wobei sich die Summe der Komponenten a), b) und c) zu 100 % addiert.

2. Zusammensetzung nach Anspruch 1, ferner umfassend mindestens einen Weichmacher d) und mindestens ein Polyvinylchlorid-Polymer e).

3. Zusammensetzung nach Anspruch 2, umfassend mindestens einen Weichmacher d), ausgewählt aus Dialkylestern von Phthalsäure, vorzugsweise Diisononylphthalat; Dialkylestern von Terephthalsäure, vorzugsweise Di-2-ethylhexylterephthalat; Trialkylestern von Trimellitsäure, vorzugsweise Tri-2-ethylhexyltrimellitat; Alkylestern von Benzoesäure, vorzugsweise Isodecylbenzoat und Isononylbenzoat; Benzoesäurediester von Mono-, Di-, Tri- oder Polyalkylenglykolen, vorzugsweise Propylenglykoldibenzoat und Dipropylenglykoldibenzoat; Dialkylestern zweibasiger Säuren, vorzugsweise Di-2-ethylhexyladipat, Di-2-ethylhexylsebacat und Di-2-ethylhexylsuccinat; Alkyl- und Aryl- und gemischen Alkyl-/Aryltriestern von Phosphorsäure, vorzugsweise Tri-2-ethylhexylphosphat, Triphenylphosphat, Tricresylphosphat, Diphenylcresylphosphat; Trialkylestern und acetylierten Trialkylestern von Citronensäure, vorzugsweise Tributylcitrat und Acetyltributylcitrat; und Arylestern von Alkylsulfonsäuren.

4. Plastisolzusammensetzung, umfassend
100 Gewichtsteile mindestens eines Polyvinylchlorid-Polymers e) in Form von einer Emulsion oder Mikrosuspension oder Extender-PVC,
20 bis 30 Gewichtsteile, vorzugsweise 40 bis 150 Gewichtsteile und ganz besonders bevorzugt 50 bis 100 Gewichtsteile mindestens eines Weichmachers d),
0 bis 70 Gewichtsteile, vorzugsweise 5 bis 60 Gewichtsteile und ganz besonders bevorzugt 10 bis 50 Gewichtsteile mindestens eines Treibmitteladditivs i) und/oder eines Polymeradditivs ii) und 0,05 bis 20 Gewichtsteile, vorzugsweise 0,5 bis 10 Gewichtsteile und ganz besonders bevorzugt 1 bis 5 Gewichtsteile einer Zusammensetzung nach einem der Ansprüche 1 bis 3.

5. Verfahren zur Herstellung einer Zusammensetzung nach einem der Ansprüche 1 bis 4, **dadurch gekennzeichnet, dass** man a) 4,4'-Oxybis(benzolsulfonylhydrazid)-Teilchen mit einer mittleren Teilchengröße D50 von 1 bis 15 Mikron und b) Natriumhydrogencarbonat-Teilchen mit einer mittleren Teilchengröße D50 von 1 bis 15 Mikron, vorzugsweise in Pulverform, in einer Mischapparatur mischt, gegebenenfalls in Gegenwart mindestens eines Beschichtungsmittels c), gegebenenfalls in Gegenwart mindestens eines Weichmachers d), gegebenenfalls in Gegenwart mindestens eines Polyvinylchlorid-Polymers e) und gegebenenfalls in Gegenwart mindestens eines Treibmitteladditivs i) und/oder eines Polymeradditivs ii).

6. Verwendung einer Zusammensetzung nach einem der Ansprüche 1 bis 3 als Treibmittel, vorzugsweise bei der Herstellung von expandierten thermoplastischen Materialien und expandiertem Kautschuk.

7. Verfahren zur Herstellung von expandierten thermoplastischen Materialien und expandiertem Kautschuk, **dadurch gekennzeichnet, dass** man eine Zusammensetzung nach einem der Ansprüche 1 bis 3 mit mindestens einem thermoplastischen Material und/oder mindestens einem Kautschuk mischt, gegebenenfalls in Gegenwart mindestens eines Polymeradditivs ii), und dann die Mischung auf eine Temperatur im Bereich von 150 bis 220 °C erhitzt.

8. Verfahren nach Anspruch 7, **dadurch gekennzeichnet, dass** das thermoplastische Material aus Polyvinylchlorid, Copolymeren auf Vinylchlorid-Basis, Polyolefinen wie Polyethylen, Polypropylen und Styrolharzen wie Polystyrol, Acrylnitril-Butadien-Styrol, Acryl-Styrol-Acrylnitril, Styrol-Acrylnitril, Acrylat-Kautschuk, Nitril-Butadien-Kautschuk, Chloropren-Kautschuk, EthylenVinylacetat-Copolymeren, Styrol-Butadien-Kautschuk und Ethylen-Propylen-Kautschuk ausgewählt wird.

9. Verfahren nach Anspruch 7 oder 8 zur Herstellung von expandiertem, weichgemachtem PVC, **dadurch gekennzeichnet, dass** man eine Zusammensetzung nach einem der Ansprüche 1 bis 8 mit dem PVC, vorzugsweise in Pulverform und in Gegenwart mindestens eines Weichmachers d) und gegebenenfalls in Gegenwart mindestens eines Polymeradditivs ii) in einer Mischvorrichtung mischt, anschließend die Mischung formt und dann die geformte Mischung auf eine Temperatur im Bereich von 150 bis 220 °C oder darüber erhitzt.

10. Verfahren nach Anspruch 9, **dadurch gekennzeichnet, dass** das PVC in Form einer Suspension, Masse und vorzugsweise als Emulsions- und Mikrosuspensions-PVC eingesetzt wird.

11. Verfahren nach Anspruch 9 oder 10, **dadurch gekennzeichnet, dass** der Weichmacher d) aus Dialkylestern von Phthalsäure, vorzugsweise Diisononylphthalat; Dialkylestern von Terephthalsäure, vorzugsweise Di-2-ethylhexylterephthalat; Trialkylestern von Trimellitsäure, vorzugsweise Tri-2-ethylhexyltrimellitat; Alkylestern von Benzoesäure, vorzugsweise Isodecylbenzoat und Isononylbenzoat; Benzoesäurediester von Mono-, Di-, Tri- oder Polyalkylenglykolen, vorzugsweise Propylenglykoldibenzoat und Dipropylenglykoldibenzoat; Dialkylestern zweibasiger Säuren, vorzugsweise Di-2-ethylhexyladipat, Di-2-ethylhexylsebacat und Di-2-ethylhexylsuccinat; Alkyl- und Aryl- und gemischen Alkyl-/Aryltriestern von Phosphorsäure, vorzugsweise Tri-2-ethylhexylphosphat, Triphenylphosphat, Tricresylphosphat, Diphenylcresylphosphat; Trialkylestern und acetylierten Trialkylestern von Citronensäure, vorzugsweise Tributylcitrat und Acetyltributylcitrat; und Arylestern von Alkylsulfonsäuren ausgewählt wird.

12. Expandiertes thermoplastisches Material oder expandierter Kautschuk, hergestellt durch das Verfahren nach Anspruch 7.

13. Formkörper, hergestellt aus dem expandierten thermoplastischen Material oder dem expandierten Kautschuk nach Anspruch 12.

## Revendications

1. Composition comprenant
a) de 4 à 50 % en poids de 4,4'-oxybis(benzènesulfonylhydrazide) sous forme de particules ayant une taille de particule moyenne D50 de 1 à 15 microns,
b) de 95 à 49 % en poids d'hydrogénocarbonate de sodium sous forme de particules ayant une taille de particule moyenne D50 de 1 à 15 microns, et
c) de 1 à 15 % en poids d'au moins un agent d'enrobage c) choisi parmi des sels de calcium, de zinc ou de magnésium d'acide stéarique,
dans laquelle la somme des composants a), b) et c) est au total de 100 %.

2. Composition selon la revendication 1, comprenant en outre au moins un plastifiant d) et au moins un polymère de chlorure de polyvinyle e).

3. Composition selon la revendication 2, comprenant au moins un plastifiant d) choisi parmi des esters de dialkyle d'acide phtalique, de préférence le phtalate de diisononyle ; des esters de dialkyle d'acide téréphtalique, de préférence le téréphtalate de di-2-éthylhexyle ; des esters de trialkyle d'acide trimellitique, de préférence le trimellitate de tri-2-éthylhexyle ; des esters d'alkyle d'acide benzoïque, de préférence le benzoate d'isodécyle et le benzoate d'isononyle ; des diesters benzoïques de mono-, di-, tri- ou polyalkylène glycols, de préférence le dibenzoate de propylène glycol et le dibenzoate de dipropylène glycol ; des esters de dialkyle d'acides dibasiques, de préférence l'adipate de di-2-éthylhexyle, le sébacate de di-2-éthylhexyle et le succinate de di-2-éthylhexyle ; des triesters d'alkyle et d'aryle et mixtes d'alkyle/aryle d'acide phosphorique, de préférence le phosphate de tri-2-éthylhexyle, le phosphate de triphényle, le phosphate de tricrésyle, le phosphate de diphénylcrésyle ; des esters de trialkyle et de trialkyle acétylé d'acide citrique, de préférence le citrate de tributyle et le citrate d'acétyltributyle ; et des esters d'aryle d'acides alkylsulfoniques.

4. Composition de plastisol comprenant 100 parties en poids d'au moins un polymère de chlorure de polyvinyle e) sous la forme de PVC en émulsion ou en microsuspension ou extendeur,
de 20 à 300 parties en poids, de préférence de 40 à 150 parties et de façon très préférable de 50 à 100 parties en poids d'au moins un plastifiant d),
de 0 à 70 parties en poids, de préférence de 5 à 60 parties et de façon très préférable de 10 à 50 parties en poids d'au moins unn additif d'agent gonflant i) et/ou un additif de polymère ii), et
de 0,05 à 20 parties en poids, de préférence de 0,5 à 10 parties et de façon très préférable de 1 à 5 parties en poids d'une composition selon l'une quelconque des revendications 1 à 3.

5. Procédé de préparation d'une composition selon l'une quelconque des revendications 1 à 4, **caractérisé en ce que** a) des particules de 4,4'-oxybis(benzènesulfonylhydrazide) ayant une taille de particule moyenne D50 de 1 à 15 microns, et b) des particules d'hydrogénocarbonate de sodium ayant une taille de particule moyenne D50 de 1 à 15 microns, de préférence sous forme de poudre, sont mélangées dans un appareil de mélange, facultativement en présence d'au moins un agent d'enrobage c), facultativement en présence d'au moins un plastifiant d), facultativement en présence d'au moins un polymère de chlorure de polyvinyle e) et facultativement en présence d'au moins un additif d'agent gonflant i) et/ou un additif de polymère ii).

6. Utilisation d'une composition selon l'une quelconque des revendications 1 à 3 en tant qu'agent gonflant, de préférence dans la fabrication de matériaux thermoplastiques expansés et de caoutchouc expansé.

7. Procédé de fabrication de matériaux thermoplastiques expansés et de caoutchouc expansé, **caractérisé en ce qu'**une composition selon l'une quelconque des revendications 1 à 3 est mélangée avec au moins un matériau thermoplastique et/ou au moins un caoutchouc facultativement en présence d'au moins un additif de polymère ii), et ensuite le mélange est chauffé jusqu'à une température dans la plage de 150 à 220 °C.

8. Procédé selon la revendication 7, **caractérisé en ce que** le matériau thermoplastique est choisi parmi le chlorure de polyvinyle, des copolymères à base de chlorure de vinyle, des polyoléfines telles que le polyéthylène, le polypropylène et des styréniques tels que le polystyrène, l'acrylonitrile le butadiène-styrène, acrylique-styrène-acrylonitrile, styrène-acrylonitrile, le caoutchouc acrylate, le caoutchouc nitrile-butadiène, le caoutchouc chloroprène, des copolymères d'éthylène-acétate de vinyle, le caoutchouc styrène-butadiène et le caoutchouc éthylène-propylène.

9. Procédé selon la revendication 7 ou 8 pour la fabrication de PVC plastifié expansé, **caractérisé par** le mélange d'une composition selon l'une quelconque des revendications 1 à 8 avec le PVC, de préférence sous forme de poudre, et en présence d'au moins un plastifiant d) et facultativement en présence d'au moins un additif de polymère ii) dans un dispositif de mélange, suivi par le façonnage du mélange et ensuite, le chauffage du mélange façonné jusqu'à une température dans la plage de 150 à 220 °C ou supérieure.

10. Procédé selon la revendication 9, **caractérisé en ce que** le PVC est utilisé sous la forme d'une suspension, d'une masse, et de préférence sous forme de PVC en émulsion et en microsuspension.

11. Procédé selon la revendication 9 ou 10, **caractérisé en ce que** le plastifiant d) est choisi parmi des esters de dialkyle d'acide phtalique, de préférence le phtalate de diisononyle ; des esters de dialkyle d'acide téréphtalique, de préférence le téréphtalate de di-2-éthylhexyle ; des esters de trialkyle d'acide trimellitique, de préférence le trimellitate de tri-2-éthylhexyle ; des esters d'alkyle d'acide benzoïque, de préférence le benzoate d'isodécyle et le benzoate d'isononyle ; des diesters benzoïques de mono-, di-, tri- ou polyalkylène glycols, de préférence le dibenzoate de propylène glycol et le dibenzoate de dipropylène glycol ; des esters de dialkyle d'acides dibasiques, de préférence l'adipate de di-2-éthylhexyle, le sébacate de di-2-éthylhexyle et le succinate de di-2-éthylhexyle ; des triesters d'alkyle et d'aryle et mixtes d'alkyle/aryle d'acide phosphorique, de préférence le phosphate de tri-2-éthylhexyle, le phosphate de triphényle, le phosphate de tricrésyle, le phosphate de diphénylcrésyle ; des esters de trialkyle et de trialkyle acétylé d'acide citrique, de préférence le citrate de tributyle et le citrate d'acétyltributyle ; et des esters d'aryle d'acides alkylsulfoniques.

12. Matériau thermoplastique expansé ou caoutchouc expansé fabriqué par le procédé selon la revendication 7.

13. Article formé fabriqué à partir du matériau thermoplastique expansé ou du caoutchouc expansé selon la revendication 12.
